# EUROPEAN PATENT SPECIFICATION

(11) **EP 2 712 017 B1**
(45) Date of publication and mention of the grant of the patent: **27.03.2019**
(21) Application number: 13183321.2
(22) Date of filing: 06.09.2013
(51) Int. Cl.: H01M 10/0525, H01M 10/0565, H01M 10/0567, C08G 63/21, C08G 63/685

(54) **Electrolyte for rechargeable lithium battery and rechargeable lithium battery including same**
Elektrolyt für eine wiederaufladbare Lithiumbatterie und wiederaufladbare Lithiumbatterie damit
Électrolyte pour batterie au lithium rechargeable et batterie au lithium rechargeable le comprenant

(30) Priority: 20.09.2012 US 201261703525 P; 04.09.2013 US 201314017840
(43) Date of publication of application: 26.03.2014
(73) Proprietor: Samsung SDI Co., Ltd., Yongin-si, Gyeonggi-do (KR)
(72) Inventor: Han, Su-Hee, Yongin-si, Gyeonggi-do (KR)
(74) Representative: Santarelli

(56) References cited:
- EP-A1- 1 715 542
- JP-A- H11 329 064
- US-A1- 2005 069 766

## Description

### BACKGROUND OF THE INVENTION

### Field of the Invention

This disclosure relates to an electrolyte for a rechargeable lithium battery and a rechargeable lithium battery the same.

### Description of the Related Art

In recent times, due to reductions in size and weight of portable electronic equipment, and popularization of portable electronic devices, researches on rechargeable lithium batteries having high energy density as a power source for portable electronic devices have been actively made. Rechargeable lithium batteries include a negative electrode, a positive electrode, and an electrolyte, and generate electrical energy by oxidation and reduction reactions when lithium ions are intercalated/deintercalated in the positive electrode and negative electrode.

Such rechargeable lithium batteries generally use lithium metal, carbon-based material, Si, and the like as negative active material, and metal chalcogenide compounds being capable of intercalating and deintercalating lithium ions, such as for example, composite metal oxides such as LiCoO₂, LiMn₂O₄, LiNiO₂, LiNi₁₋ₓCoₓO₂ (0<X<1), LiMnO₂, and the like, as positive active material of rechargeable lithium batteries.

EP 1 715 542 A1 discloses a polymer electrolyte for a lithium secondary battery comprising a non-aqueous solvent, a lithium salt, and a polymer being obtained by polymerization of at least one monomer represented by the formula: A-polyesterpolyol-B, wherein the polyesterpolyol is being obtained by condensation of at least one alcohol having from 2 to 6 OH groups and at least one dicarboxylic acid, the polyesterpolyol having a weight average molecular weight ranging from about 100 to about 10,000,000, and each of A and B are linked to terminal OH groups of the polyesterpolyol, each of A and B being selected from the group consisting of CH₂=CRC(=O)-,
CH₂=CR-O-CH2-, CH₂=CR-, CH₂=CR-O-C(=O)-,
CH₂=CH-CH₂-O-,
CH₂=CH-S(=O)₂-, and
CH₂=CR-C(=O)-O-CH₂CH₂-NH-C(=O)-, wherein R is selected from the group consisting of C₁ to C₁₀ hydrocarbons and C₆ to C₁₀ aromatic hydrocarbons.

### SUMMARY OF THE INVENTION

An object of the invention as defined in claim 1 is to provide an electrolyte for a rechargeable lithium battery exhibiting good formation capacity and cycle-life characteristics.

Another object of the invention as defined in claim 11 is to provide a rechargeable lithium battery including the electrolyte.

According to the invention, an electrolyte includes an alkyl acrylate additive having a C4 to C15 alkyl group; fluoroethylene carbonate; a monomer; a polymerization initiator; a lithium salt; and an organic solvent.

The alkyl acrylate additive may be a halogenated alkyl acrylate, wherein the halogen is F, Cl, Br, I, or a combination thereof. According to one embodiment, the halogenated alkyl acrylate is alkyl acrylate in which at least 1 to 31 hydrogens of the alkyl group are substituted with halogen(s).

The amount of the additive may be 1.25 wt% to 2 wt%, preferably about 1.5 wt%, based on the total weight (100 wt%) of the electrolyte.

The viscosity of the electrolyte may be 4 centipoises to 30 centipoises (1 centipoise = 1 cps = 1 mPa.s).

The amount of fluoroethylene carbonate may be 1 wt% to 20 wt%, based on the total weight of the electrolyte.

The monomer may include a compound having at least one carbon-carbon double bond, and generally chosen from the group consisting of multifunctional acrylates; poly(ethylene glycol) dimethacrylates, poly(ethylene glycol) diacrylates; poly(ethylene glycol) divinyl ether ethylene glycol dimethacrylates; ethylene glycol diacrylates; ethylene glycol divinyl ether hexanediol diacrylates; tripropylene glycol diacrylate; tetraethylene glycol monoacrylate; caprolactone acrylate; polyester polyols; or a combination thereof. According to the invention, the monomer includes a compound represented by following Chemical Formula 1: 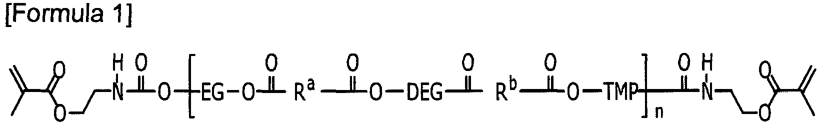
wherein, R^{a} and R^{b} are the same or different, and are substituted or unsubstituted C1 to C6 divalent alkylene;
EG is a divalent moiety of ethylene glycol;
DEG is a divalent moiety of diethylene glycol; and
TMP is a divalent moiety of trimethylolpropane.

According to the invention, the compound presented by Formula 1 has a weight average molecular weight of 60,000 to 100,000 g/mol.

The amount of monomer is preferably in the range of 1 wt% to 20 wt%, based on the total weight of the electrolyte.

The polymerization initiator is usually anorganic peroxide or an azo-based compound, or a mixture thereof. Preferably, the amount of the polymerization initiator is in the range of 0.01 wt% to 0.4 wt%, based on the total weight of the electrolyte.

The amount of the mixture of fluroethylene carbonate and organic solvent may be in the range of 90% to 95%, based on the total weight of the electrolyte.

The ratio of the alkyl acrylate additive to the monomer may be advantageously in the range of from 1:2 to 1:10.

According to the invention as defined in claim 12, a process of manufacturing a rechargeable lithium battery includes that the rechargeable lithium battery is treated by curing at a temperature of 40°C to100°C so that to polymerize the monomer in the battery case.

According to the invention as defined in claim 13, a rechargeable lithium battery obtainable by the process of manufacturing as defined in claim 12 is provided.

The electrolyte for a rechargeable lithium battery may improve the formation capacity and the cycle-life characteristics.

### BRIEF DESCRIPTION OF THE DRAWING

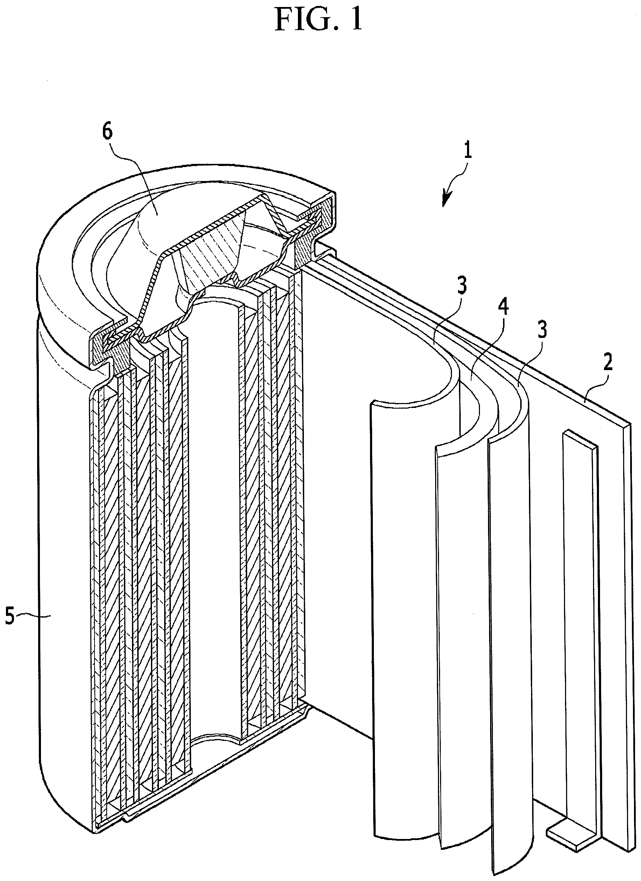

Fig. 1 is a schematic view illustrating a structure of a rechargeable lithium battery according to the invention.

### DETAILED DESCRIPTION OF THE INVENTION

Exemplary embodiments of the invention will hereinafter be described in detail. However, this disclosure is not limited thereto.

An electrolyte for a rechargeable lithium battery according to the invention, includes an alkyl acrylate additive having a C4 to C15 alkyl group; fluoroethylene carbonate; a monomer; a polymerization initiator; a lithium salt; and an organic solvent.

If there are less than 4 carbons in the alkyl group, it is believed that the electrolyte may advantageously facilitate the deterioration of the cycle-life characteristics. If there are more than 15 carbons in the alkyl group, it is believed that the electrolyte may cause a decrease in the capacity of the battery.

Exemplary of the alkyl acrylate may be butyl acrylate, isodecyl acrylate, hexyl acrylate, or a combination thereof. The alkyl acrylate may be a halogenated alkyl acrylate, wherein the halogenis F, Cl, Br, I, or a combination thereof.

The halogenated alkyl acrylate may be an alkyl acrylate of which 1 to 31 hydrogen may be substituted with a halogen. Preferably, the halogenated alkyl acrylate may be an alkyl acrylate of which 1 to 4 hydrogen may be substituted with a halogen. An example of the halogen alkyl acrylate may be heptafluoro butyl acrylate. It is believed that the halogenated alkyl acrylate gives improved safety and rate capability to the battery.

The amount of the additive may be from 1.25 wt% to 2 wt%, based on the total weight of the electrolyte. When the amount of the additive is within the above range, it is believed that this additive may effectively suppress uncharged portion generation, and that this additive may give high formation capacity. Furthermore, when the amount of the additive is within into the above range, it is believed that it improves cycle-life characteristics and capacity of the battery.

The amount of fluoroethylene carbonate may be 1 wt% to 20 wt%, based on the total weight of the electrolyte. It is believed that such an amount of fluoroethylene carbonate advantageously allows improvement in the cycle-life characteristics and effectively suppresses swelling problems.

The electrolyte is advantageously a gel electrolyte having a viscosity of from 4 to 30 centipoises (mPa.s). According to the invention, such a gel electrolyte is a chemical polymer electrolyte obtained from polymerization within the battery case of the battery. The gel electrolyte is advantageously prepared by adding a monomer and a polymerization initiator to a mixture of an alkyl acrylate additive, fluoroethylene carbonate, a lithium salt, and an organic solvent to prepare an electrolyte composition, fabricating a battery using this composition, and making a cross-linking reaction occur (curing reaction) within the battery case. It is believed that if the alkyl acrylate additive is used within a liquid electrolyte, the desired cycle-life characteristics cannot be obtained.

The monomer may include a compound having at least one carbon-carbon double bond. Exemples thereof may be multifunctional acrylates (a polyester (meth)acrylate polymer in which an -OH group of a polyester polyol is partially substituted with (meth)acrylic acid ester); poly(ethylene glycol) dimethacrylates, poly(ethylene glycol) diacrylates; poly(ethylene glycol) divinyl ether ethylene glycol dimethacrylates; ethylene glycol diacrylates; ethylene glycol divinyl ether hexanediol diacrylates; tripropylene glycol diacrylates; tetraethylene glycol monoacrylate; caprolactone acrylate; polyester polyols; or a combination thereof. The polyester polyol may be obtained by esterification-reacting multifunctional carboxylic acid with an alcohol. The multifunctional carboxylic acid may be adipic acid, and the alcohol may be ethylene glycol, propylene glycol, alkane diol, ethoxylated alkanediol, propoxylated alkanediol, trimethylol propane, ethoxylated trimethylol propane, propoxylated trimethylol propane, ditrimethylol propane, ethoxylated ditrimethylol propane, propoxylated ditrimethylol propane, pentaerythritol, ethoxylated pentaerythritol, propoxylated dipentaerythritol, bisphenol A, ethoxylated bisphenol A, propoxylated bisphenol A, or a combination thereof.

The monomer may be a compound represented by Chemical Formula 1. 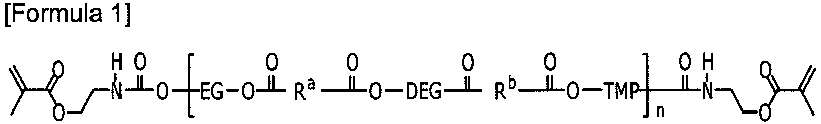
wherein, R^{a} and R^{b} are the same or different, and are substituted or unsubstituted C1 to C6 divalent alkylene;
EG is a divalent moiety of ethylene glycol;
DEG is a divalent moiety of diethylene glycol; and
TMP is a divalent moiety of trimethylolpropane.

The substituted alkylene refers to an alkylene of which at least one hydrogen is substituted with C1 to C3 alkyl.

The compound represented by Formula 1 has a weight average molecular weight of 60,000 to 100,000 g/mol.

The amount of the monomer may be suitably controlled, and for example, the amount of the monomer may befrom 1 wt% to 20 wt%, based on the total weight of the electrolyte. It is believed that if the amount of the monomer is more than 20 wt%, this severely increases the viscosity of the resulting electrolyte, thereby inhibiting an immersion of the electrolyte into the electrode, so that the uncharged areas become enlarged, thereby deteriorating the initial capacity characteristics and the cycle-life characteristics. In contrast, it is believed that an amount of less than 1 wt% of the monomer is not sufficient to form a gel, and thus results in a decrease in the adhesion between the electrodes, thereby increasing resistance and deteriorating the cycle-life characteristics, and bending the battery during the charge and discharge.

Any material being capable of easily initiating polymerization of monomers and not deteriorating battery performance may be used as the polymerization initiator. Typical exemplary initiators may be either organic peroxide or an azo-based compound, or a mixture thereof. The organic peroxide may include peroxydicarbonates such as di(4-t-butylcyclohexyl) peroxydicarbonate, di-2-ethylhexyl peroxydicarbonate, di-isopropyl peroxydicarbonate, di-3-methoxybutyl peroxydicarbonate, t-butyl peroxy-isopropyl carbonate, t-butylperoxy-2-ethylhexyl carbonate, 1,6-bis(t-butyl peroxycarbonyloxy)hexane, diethyleneglycol-bis(t-butyl peroxycarbonate), and the like; diacyl peroxides such as diacetyl peroxide, dibenzoyl peroxide, dilauroyl peroxide, bis-3,5,5-trimethyl hexanoyl peroxide, and the like; and peroxyesters such as perhexyl pivalate, t-butyl peroxy pivalate, t-amyl peroxy pivalate, t-butyl peroxy-2-ethyl-hexanoate, t-hexyl peroxy pivalate, t-butyl peroxy neoheptanoate, t-butyl peroxy neoheptanoate, t-hexyl peroxy pivalate, 1,1,3,3-tetramethylbutyl peroxy neodecarbonate, 1,1,3,3-tetramethylbutyl 2-ethylhexanoate, t-amylperoxy 2-ethylhexanoate, t-butyl peroxy isobutyrate, t-amylperoxy 3,5,5-trimethyl hexanoyl, t-butyl peroxy 3,5,5-trimethylhexanoate, t-butyl peroxy acetate, t-butyl peroxy benzoate, di-butylperoxy trimethyl adipate and the like, and their mixtures. The azo-based compounds include 2,2'-azo-bis(isobutyronitrile), 2,2'-azo-bis(2,4-dimethylvaleronitrile), and 1,1'-azo-bis(cyanocyclo-hexane) and the like, and their mixtures.

The polymerization initiator is advantageously added to the polymerization reaction composition in an amount that may initiate the polymerization reaction of the monomers. In one embodiment, the amount of the polymerization initiator is from 0.01 wt% to 0.4 wt%, based on the total weight of the electrolyte.

When the included amount of the polymerization initiator is within the stated range, the polymerization initiator is usually and preferably (entirely) consumed during the polymerization process. Thus, the polymerization initiator may not remain in the prepared polymer electrolyte. It is believed to be important because when the polymerization initiator is a peroxide-based compound, CO₂ gas may be generated, and, when the polymerization initiator is an azo-based compound, N₂ gas may be generated. The absence of part of the polymerization initiator remaining in the polymerized electrolyte advantageously prevents any sub-reaction(s) such as generation of gas. Moreover, adding an appropriate amount of the polymerization initiator to the polymerization reaction mixture advantageously ensures an appropriate degree of polymerization.

The rechargeable lithium battery using the electrolyte according to the invention is prepared by fabricating an electrode assembly using a suitable process to include a positive electrode, a separator, and a negative electrode; inserting the electrode assembly into a battery case; injecting an electrolyte into the battery case; and curing the electrolyte in the battery case.

The curing may be advantageously performed under a temperature of 40°C to 100°C.

Since the polymerization reaction is initiated by the polymerization initiator included in the electrolyte according to the invention during the curing process, to thereby form a polymer, the battery after polymerization includes an electrolyte comprising a polymer.

The battery case may be a metal can or a metal-laminated pouch.

The organic solvent generally serves as a medium for transmitting the ions taking part to the electrochemical reaction of the battery. The organic solvent may include a carbonate-based, ester-based, ether-based, ketone-based, alcohol-based, aprotic solvent; or a mixture thereof. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like; and their mixtures. Examples of the ester-based solvent may include methyl acetate, ethyl acetate, n-propyl acetate, methylpropionate, ethylpropionate, γ-butyrolactone, decanolide, valerolactone, mevalonolactone, caprolactone, and the like; and their mixtures. Examples of the ether-based solvent include dibutyl ether, tetraglyme, diglyme, dimethoxyethane, 2-methyltetrahydrofuran, tetrahydrofuran, and the like, and their mixtures and examples of the ketone-based solvent include cyclohexanone and the like; and their mixtures. Examples of the alcohol-based solvent include ethyl alcohol, isopropyl alcohol, and the like, and their mixtures, and examples of the aprotic solvent include nitriles such as R-CN (where R is a C2 to C20 linear, branched, or cyclic hydrocarbon, and R can comprise a double bond carbon-carbon, an aromatic ring, or an ether bond), amides such as dimethylformamide, dioxolanes such as 1,3-dioxolane, sulfolanes, and the like; and their mixtures.

The organic solvent may be used alone or in a mixture. When the organic solvent is used in a mixture, the mixture ratio can be controlled in accordance with a desirable battery performance as known from the skilled person.

The carbonate-based solvent may advantageously include a mixture of a cyclic carbonate and a linear carbonate. The cyclic carbonate and the linear carbonate are usually mixed together in a volume ratio of 1:1 to 1:9. When said mixture is used as an electrolyte, the electrolyte performance may be enhanced. In addition, the non-aqueous organic electrolyte may further include mixtures of carbonate-based solvents and aromatic hydrocarbon-based solvents. The carbonate-based solvents and the aromatic hydrocarbon-based solvents may be mixed together generally in a volume ratio of 1:1 to 30:1. The aromatic hydrocarbon-based organic solvent may be represented by following Chemical Formula 2.

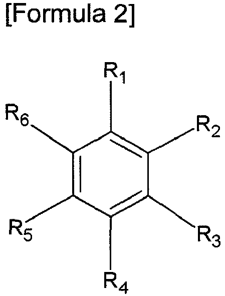

In Chemical Formula 2, R₁ to R₆ are independently selected from the group consisting of hydrogen, a halogen, a C1 to C10 alkyl group, a C1 to C10 haloalkyl group, and a combination thereof. The aromatic hydrocarbon-based organic solvent may include, but is not limited to, at least one component selected from the group consisting of benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof. The electrolyte may further include a solvent of vinylene carbonate, an ethylene carbonate-based compound of following Chemical Formula 3, or a combination thereof, as an additive for increasing the cycle-life characteristics.

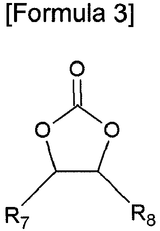

In Chemical Formula 3, R₇ and R₈ are the same or different, and are selected from the group consisting of hydrogen, a halogen, a cyano group (CN), a nitro group (NO₂), and a C1 to C5 fluoroalkyl group, provided that at least one of R₇ and R₈ is selected from the group consisting of a halogen, a cyano group (CN), a nitro group (NO₂), and a C1 to C5 fluoroalkyl group.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like; and their mixtures. An amount of the additive for increasing the cycle-life characteristics may be suitably controlled.

As known in the art, the lithium salt supplies lithium ions in the battery, operates a basic operation of a rechargeable lithium battery, and improves lithium ion transport between positive and negative electrodes. Examples of the lithium salt include at least one supporting salt selected from LiPF₆, LiBF₄, LiSbF₆, LiAsF₆, LiN(SO₂C₂F₅)₂, Li (CF₃SO₂)₂N, LiC₂F₅SO₃, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, LiI, and LiB(C₂O₄)₂ (lithium bisoxalato borate, LiBOB). The lithium salt may be used in a concentration ranging from 0.1 M to 2.0 M. When the lithium salt is included at the above concentration range, electrolyte performance and lithium ion mobility may be enhanced due to optimal electrolyte conductivity and viscosity.

The invention also encompasses a rechargeable lithium battery including a negative electrode including a negative active material, a battery case a positive electrode including a positive active material, and the electrolyte according to the invention.

The electrolyte is preferably and advantageously a gel electrolyte. Particularly, such a gel electrolyte may be a chemical polymer electrolyte obtained from polymerization within the battery case. The gel electrolyte is usually prepared by adding a monomer and a polymerization initiator to a mixture of an alkyl acrylate additive, fluoroethylene carbonate, a lithium salt, and an organic solvent to prepare an electrolyte, fabricating a battery using this electrolyte, and making a cross-linking reaction occur within the battery case.

The negative electrode usually includes a current collector and a negative active material layer formed on the current collector. The negative active material layer generally includes the negative active material.

The negative active material usually includes a material that reversibly intercalates/deintercalates lithium ions, a lithium metal, a lithium metal alloy, a material being capable of doping/dedoping lithium, or a transition metal oxide. The material that can reversibly intercalate/deintercalate lithium ions generally includes a carbon material.

The carbon material is a well-known carbon-based negative active material in a lithium ion rechargeable battery. Examples of the carbon material include crystalline carbon, amorphous carbon, and mixtures thereof. The crystalline carbon particles may be non-shaped, or have the shape of sheet, flake, spherical, or fiber shaped natural graphite or artificial graphite. The amorphous carbon may be a soft carbon, a hard carbon, a mesophase pitch carbonization product, fired coke, and the like.

Examples of the lithium metal alloy usually include lithium and an element selected from Na, K, Rb, Cs, Fr, Be, Mg, Ca, Sr, Si, Sb, Pb, In, Zn, Ba, Ra, Ge, Al, and Sn. The material being capable of doping/dedoping lithium may generally include Si, a Si-C composite, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition element, a rare earth element, and a combination thereof, and is not Si), Sn, SnO₂, a Sn-R alloy (wherein R is an element selected from an alkali metal, an alkaline-earth metal, a Group 13 element, a Group 14 element, a Group 15 element, a Group 16 element, a transition element, a rare earth element, and a combination thereof, and is not Sn), and the like; and their mixtures. At least one of these materials may be mixed with SiO₂.

The element Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po or combination thereof; and their mixtures.

The transition metal oxide usually includes vanadium oxide, lithium vanadium oxide, and the like.

The negative active material may be included in an amount of 95 wt% to 99 wt%, based on the total weight of the negative active material layer. The negative active material layer may further include a binder, and optionally a conductive material. The negative active material layer may include 1 to 5 wt% of a binder, based on the total weight of the negative active material layer.

When the negative active material layer includes a conductive material, the negative active material layer usually includes 90 wt% to 98 wt% of the negative active material, 1 wt% to 5 wt% of the binder, and 1 wt% to 5 wt% of the conductive material.

The binder generally improves binding properties of negative active material particles with one another and with a current collector. The binder usually includes a non-water-soluble binder, a water-soluble binder, or a combination thereof.

Examples of the non-water-soluble binder generally include polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, and combinations thereof. The water-soluble binder generally includes a styrene-butadiene rubber, an acrylated styrene-butadiene rubber, polyvinyl alcohol, sodium polyacrylate, a copolymer including propylene and a C2 to C8 olefin, a copolymer of (meth)acrylic acid and (meth)acrylic acid alkyl ester, or a combination thereof; and their mixtures.

When the water-soluble binder is used as a negative electrode binder, a cellulose-based compound may be further used to render the medium more viscous.

The cellulose-based compound usually includes one or more of carboxylmethyl cellulose, hydroxypropylmethyl cellulose, methyl cellulose, or alkaline metal salts thereof; and their mixtures. The alkaline metal may be sodium (Na), potassium (K), or lithium (Li). The cellulose-based compound may be included in an amount of 0.1 to 3 parts by weight, based on the negative active material.

As for the conductive material, any electro-conductive material that does not cause a chemical change may be used. Non-limiting examples of the conductive material include a carbon-based material such as natural graphite, artificial graphite, carbon black, acetylene black, ketjen black, and carbon fiber; a metal-based material such as a metal powder or a metal fiber including copper, nickel, aluminum, and silver; a conductive polymer such as a polyphenylene derivative; and a mixture thereof.

The negative electrode includes a current collector, and the current collector generally includes a copper foil, a nickel foil, a stainless steel foil, a titanium foil, a nickel foam, a copper foam, a polymer substrate coated with a conductive metal, or combinations thereof. The negative and positive electrodes may be fabricated by a method including mixing the active material, a conductive material, and a binder in a solvent to provide an active material composition, and coating the composition on a current collector. The negative electrode manufacturing method is well known, and thus is not described in detail in the present specification. The solvent may be N-methyl pyrrolidone, or water when the non-water soluble binder is used, but is not limited thereto.
The positive electrode generally includes a current collector and a positive active material layer disposed on the current collector. The positive active material may include a compound that reversibly intercalates and deintercalates lithium (a lithiated intercalation compound). Specifically, a compound represented by one of the following formulas may be used: LiₐA_{1-b}X_{b}D₂ (0.90 ≤ a ≤ 1.8, 0 ≤ b ≤ 0.5); LiₐA_{1-b}X_{b}O_{2-c}D_{c} (0.90 ≤ a ≤ 1.8, 0 ≤ b ≤0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}CO_{b}X_{c}D_{α} (0.90 ≤ a ≤1.8, 0 ≤ b ≤ 0.5, 0 ≤ c ≤ 0.5, 0 < α ≤ 2); LiₐNi_{1-b-c}Co_{b}X_{c}O2-αT_{α} (0.90 ≤ a ≤ 1.8, 0 ≤ b ≤ 0.5, 0 ≤ c ≤ 0.05, 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0:5 b ≤ 0.9, 0 ≤ c ≤ 0.5, 0 ≤ d ≤0.5, 0.001 ≤ e≤ 0.1); LiₐNiG_{b}O₂ (0.90 ≤ a ≤ 1.8, 0.001 ≤ b ≤ 0.1); LiₐCoG_{b}O₂ (0.90 ≤a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li_{(3-f)}J₂ PO₄₃ (0 ≤ f ≤ 2); Li_{(3-f)}Fe₂ PO₄₃ (0 ≤ f ≤ 2); LiₐFePO₄ (0.90 ≤ a ≤ 1.8)

In the above formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline.

The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known to those who work in the related field.

In the positive active material layer, the mixture of a positive active material and an activated carbon coated with a fibrous carbon material may be in an amount ranging from 90 wt% to 98 wt% based on the total weight of the positive active material layer. The positive active material layer also generally includes a binder and a conductive material. The binder and conductive material may be included in amounts of 1 wt% to 5 wt% based on the total weight of the positive active material layer, respectively.

The binder improves binding properties of the positive active material particles to each other and to a current collector. Examples of the binder include polyvinyl alcohol, carboxylmethyl cellulose, hydroxypropyl cellulose, diacetyl cellulose, polyvinyl chloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like; and their mixtures, but are not limited thereto.

The conductive material usually leads to the obtention of an electrode with conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material such as a metal powder or metal fiber including copper, nickel, aluminum, silver, and the like; a conductive polymer such as polyphenylene derivative; or a mixture thereof.

The current collector may be Al, but is not limited thereto. The positive electrode may be fabricated by a method including mixing an active material, a conductive material, and a binder in a solvent to prepare an active material composition, and coating the active material composition on a current collector. The positive electrode manufacturing method is well known, and thus is not described in detail in the present specification. The solvent may be N-methyl pyrrolidone, but is not limited thereto.

The rechargeable lithium battery may further include a separator between the negative electrode and the positive electrode, as needed. Examples of suitable separator materials include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

FIG. 1 is a schematic view of a representative structure of a rechargeable lithium battery according to one embodiment. As shown in FIG. 1, the rechargeable lithium battery 1 includes a battery case 5 including a positive electrode 3, a negative electrode 2, and a separator interposed between the positive electrode 3 and the negative electrode 2, an electrolyte solution impregnated therein, and a sealing member 6 sealing the battery case 5.

The following examples illustrate the present invention in more detail. These examples, however, can not in any sense be interpreted as limiting the scope of this disclosure.

### (Example 1)

Fluoroethylene carbonate and n-butyl acrylate were added to a mixture including 1M LiPF₆ dissolved in a mixed solvent of ethylene carbonate, ethylmethyl carbonate, and dimethyl carbonate (1:1:1 volume ratio) to prepare an electrolyte precursor.

A polyester polyol monomer obtained from the condensation of ethylene glycol, diethylene glycol, trimethylolpropane, and adipic acid, and represented by Chemical Formula 4 (weight average molecular weight: 60,000 g/mol), and a 2,2-azo-bis-(2,4-dimethylvaleronitrile) polymerization initiator were added to the electrolyte precursor, to prepare an electrolyte.

An amount of fluoroethylene carbonate was 3 wt% based on the total amount of the electrolyte, and an amount of the n-butyl acrylate was 1.5 wt%, based on the total amount of the electrolyte.

The amount of the monomer was 10 wt%, based on the total weight of the electrolyte, and the amount of the polymerization initiator was 0.1 wt%, based on the total weight of the electrolyte. 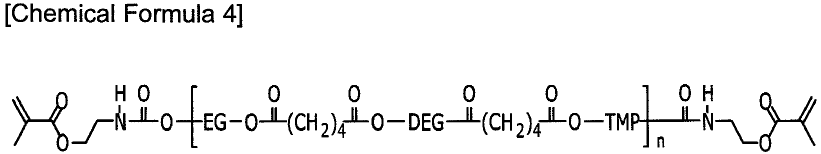 wherein, EG is a divalent moiety of ethylene glycol; DEG is a divalent moiety of diethylene glycol; and TMP is a divalent moiety of trimethylolpropane.

The viscosity of the electrolyte was measured at a room temperature (25°C) and the result was 8cP (8 mPa.s).

A LiCoO₂ positive active material, a polyvinylidene fluoride binder (trade mark: KF7200), and a denka black conductive material were mixed in an N-methyl pyrrolidone solvent at a weight ratio of 98:1:1, to prepare a positive active material slurry. The positive active material slurry was coated on an Al current collector, dried and compressed to fabricate a positive electrode.

A graphite negative active material, a polyvinylidene fluoride binder (trade mark: KF7200) and a denka black conductive material were mixed in an N-methyl pyrrolidone solvent at a weight ratio of 98:1:1, to prepare a negative active material slurry. The negative active material slurry was coated on a Cu current collector, dried and compressed, to fabricate a negative electrode.

A polyethylene film separator was inserted between the positive electrode and the negative electrode and the electrolyte was injected therein, thereby fabricating a rechargeable lithium cell with a capacity of 3600 mAh.

The rechargeable lithium cell was allowed to stand at 60°C for 1 hour, to occur a polymerization of the electrolyte within the rechargeable lithium cell. As a result, a rechargeable lithium cell including a gel polymer electrolyte was fabricated.

### (Example 2)

A rechargeable lithium cell with a gel polymer electrolyte was fabricated by the same procedure as in Example 1, except that the amount of n-butyl acrylate was changed to 2 wt%, based on the total weight of the electrolyte.

### (Example 3)

A rechargeable lithium cell with a gel polymer electrolyte was fabricated by the same procedure as in Example 1, except that the amount of n-butyl acrylate was changed to 1.25 wt%, based on the total weight of the electrolyte.

### (Comparative Example 1)

A rechargeable lithium cell with a gel polymer electrolyte was fabricated by the same procedure as in Example 1, except that n-butyl acrylate was not used.

### (Comparative Example 2)

A rechargeable lithium cell with a gel polymer electrolyte was fabricated by the same procedure as in Example 1, except that methyl acrylate was used in an amount of 1.5 wt%, based on the total weight of the electrolyte, instead of n-butyl acrylate.

### (Comparative Example 3)

A rechargeable lithium cell with a gel polymer electrolyte was fabricated by the same procedure as in Example 1, except that ethyl acrylate was used in an amount of 1.5 wt%, based on the total weight of the electrolyte, instead of n-butyl acrylate.

### (Comparative Example 4)

A rechargeable lithium cell with a gel polymer electrolyte was fabricated by the same procedure as in Example 1, except that allyl methacrylate was used in an amount of 1.5 wt%, based on the total weight of the electrolyte, instead of n-butyl acrylate.

### (Comparative Example 5)

A rechargeable lithium cell with a gel polymer electrolyte was fabricated by the same procedure as in Example 1, except that the amount of hexyl methacrylate was changed to 1.5 wt%, based on the total weight of the electrolyte, instead of n-butyl acrylate.

### (Comparative Example 6)

A rechargeable lithium cell with a gel polymer electrolyte was fabricated by the same procedure as in Example 1, except that hydroxyl acrylate was used in an amount of 1.5 wt%, based on the total weight of the electrolyte, instead of n-butyl acrylate.

### (Comparative Example 7)

n-butyl acrylate was added to an electrolyte precursor including 1M LiPF₆ dissolved in a mixed solvent of ethylene carbonate, ethylmethyl carbonate, and dimethyl carbonate (1:1:1 volume ratio), to prepare a liquid electrolyte.

An amount of the n-butyl acrylate was 1.5 wt%, based on the total amount of the electrolyte. The viscosity of the electrolyte was measured at a room temperature (25°C) and the result was cP (1cP = 1 mPa.s).

### * Determination of numbers and size for uncharged portions

The rechargeable lithium cells according to Examples 1 to 3 and Comparative Example 1 to 7 were charged and discharged at 1C once, the rechargeable lithium cells were disassembled, and the numbers and sizes of the uncharged portions were measured. The results are shown in Table 1. In Table 1, EA refers to number.

**Table 1**

| | Additives, wt% | Size of uncharged portions (mm) | Numbers for size for the uncharged portions |
|---|---|---|---|
| Example 1 | n-butyl acrylate, 1.5 wt% | Diameter of 2 mm or less | 2EA |
| Example 2 | n-butyl acrylate, 2 wt% | Diameter of 2 mm or less | 2EA |
| Example 3 | n-butyl acrylate, 1.25 wt% | Diameter of 2 mm or less | 2EA |
| Comparative Example 1 | No n-butyl acrylate | Diameter of 9 mm or more | 7EA |
| Comparative Example 2 | methyl acrylate, 1.5 wt% | Diameter of 5 mm or more | 6EA |
| Comparative Example 3 | ethyl acrylate, 1.5 wt% | Diameter of 5 mm or more | 5EA |
| Comparative Example 4 | allyl methacrylate, 1.5 wt% | Diameter of 5 mm or more | 5EA |
| Comparative Example 5 | hexyl methacrylate, 1.5 wt% | Diameter of 5 mm or more | 5EA |
| Comparative Example 6 | hydroxyethyl acrylate, 1.5 wt% | Diameter of 5 mm or more | 6EA |
| Comparative Example 7 | n-butyl acrylate, 1.5 wt% | Diameter of 2mm or less | 4EA |

As shown in Table 1, the sizes of the uncharged portions in the cells according to Examples 1 to 3 were smaller than those in the cells according to Comparative Examples 1 to 7. It can be expected from the results that the initial capacity and the inferior ratio for the OCV (Open Circuit Voltage) are reduced in Examples 1 to 3, compared to Comparative Examples 1 to 7.

### * Formation capacity

The rechargeable lithium cells according to Examples 1 to 3 and Comparative Examples 1 to 7 were formation-charged at 1C once, and the discharge capacity was measured. The results are shown in Table 2.

**Table 2**

| | Additive, wt% | Capacity (mAh) |
|---|---|---|
| Example 1 | n-butyl acrylate, 1.5 wt% | 3700 |
| Example 2 | n-butyl acrylate, 2 wt% | 3720 |
| Example 3 | n-butyl acrylate, 1.25 wt% | 3690 |
| Comparative Example 1 | No n- butyl acrylate | 3450 |
| Comparative Example 2 | methyl acrylate, 1.5 wt% | 3640 |
| Comparative Example 3 | ethyl acrylate, 1.5 wt% | 3760 |
| Comparative Example 4 | allyl methacrylate, 1.5 wt% | 3630 |
| Comparative Example 5 | hexyl methacrylate, 1.5 wt% | 3630 |
| Comparative Example 6 | hydroxyethyl acrylate, 1.5wt% | 3600 |
| Comparative Example 7 | n-butyl acrylate, 1.5 wt% | 3730 |

As shown in Table 2, the cells according to Examples 1 to 3 exhibit higher capacity than those according to Comparative Example 1, 2, and 5 to 7.

### * Cycle-life characteristics

The rechargeable lithium cells according to Examples 1 to 3 and Comparative Examples 1 to 7 were charged and discharged at 1C 200 times. When the discharge capacity at the first discharge cycle is referred to as 100 %, the percentages, of the discharge capacity after 200 times were calculated. The results are shown in Table 3.

**Table 3**

| | Additive, wt% | Cycle-life characteristic (%) |
|---|---|---|
| Example 1 | n-butyl acrylate, 1.5 wt% | 91 |
| Example 2 | n-butyl acrylate, 2 wt% | 84 |
| Example 3 | n-butyl acrylate, 1.25 wt% | 89 |
| Comparative Example 1 | No n-butyl acrylate | 59 |
| Comparative Example 2 | methyl acrylate, 1.5 wt% | 76 |
| Comparative Example 3 | ethyl acrylate, 1.5 wt% | 80 |
| Comparative Example 4 | allyl methacrylate, 1.5 wt% | 79 |
| Comparative Example 5 | hexyl methacrylate, 1.5 wt% | 78 |
| Comparative Example 6 | hydroxyethyl acrylate, 1.5 wt% | 79 |
| Comparative Example 7 | n-butyl acrylate, 1.5 wt% | 62 |

As shown in Table 3, the cells according to Examples 1 to 3 exhibits better cycle-life characteristics, compared to the cells according to Comparative Examples 1 to 7. It can be clearly shown from the results in Table 2 and Table 3 that the cells according to Examples 1 to 3 exhibit better capacity and cycle-life characteristics, whereas, the cells according to Comparative Examples 1, 2 and 5 to 7 exhibit good capacity, but have deteriorated cycle-life characteristics.

### (Example 4)

A rechargeable lithium cell with a gel polymer electrolyte was fabricated by the same procedure as in Example 1, except that heptafluorobutyl acrylate was used in an amount of 1.25 wt%, based on the total weight of the electrolyte, instead of n-butyl acrylate.

### (Comparative Example 8)

A rechargeable lithium cell with a gel polymer electrolyte was fabricated by the same procedure as in Example 4, except that methyl acrylate was used in amount of 1.5 wt%, based on the total weight of the electrolyte, instead of heptafuoroethyl acrylate.

### (Comparative Example 9)

A rechargeable lithium cell with a gel polymer electrolyte was fabricated by the same procedure as in Example 4, except that ethyl acrylate was used in an amount of 1.5 wt%, based on the total weight of the electrolyte, instead of heptafuorobutyl acrylate.

### (Comparative Example 10)

A rechargeable lithium cell with a gel polymer electrolyte was fabricated by the same procedure as in Example 4, except that allyl methacrylate was used in an amount of 1.5 wt%, based on the total weight of the electrolyte, instead of heptafuorobutyl acrylate.

The cells according to Example 4 and Comparative Examples 8 to 10 were formation charged at 1C once, and the discharge capacity was measured. The results are shown in Table 4.

**Table 4**

| | Additive, wt% | Formation capacity (mAh) |
|---|---|---|
| Example 4 | heptafluoro butyl acrylate, 1.5 wt% | 3753 |
| Comparative Example 8 | methyl acrylate, 1.5 wt% | 3629 |
| Comparative Example 9 | ethyl acrylate, 1.5 wt% | 3626 |
| Comparative Example 10 | allyl methacrylate, 1.5 wt% | 3579 |

As shown in Table 4, the cell according to Example 4 exhibits higher capacity than the cells according to Comparative Examples 8 to 10.

### (Example 5)

A rechargeable lithium cell with a gel polymer electrolyte was fabricated by the same procedure as in Example 1, except that n-butyl acrylate was used at an amount of 1.5 wt%, based on the total weight of the electrolyte and the cell capacity was changed to 1200mAh/g.

### (Example 6)

A rechargeable lithium cell with cell capacity of 1200m Ah/g and a gel polymer electrolyte was fabricated by the same procedure as in Example 5, except that hexyl acrylate was used at an amount of 1.5 wt%, based on 100 wt% of the total weight of the electrolyte, instead of n-butyl acrylate.

### (Example 7)

A rechargeable lithium cell with cell capacity of cell capacity of 1200 mAh/g and a gel polymer electrolyte was fabricated by the same procedure as in Example 5, except that isodecyl acrylate was used at an amount of 1.5 wt%, based on the total weight of the electrolyte, instead of n-butyl acrylate.

### (Comparative Example 11)

A rechargeable lithium cell with cell capacity of 1200m Ah/g and a gel polymer electrolyte was fabricated by the same procedure as in Example 5, except that propyl acrylate was used at an amount of 1.5 wt%, based on the total weight of the electrolyte, instead of n-butyl acrylate.

### (Comparative Example 12)

A rechargeable lithium cell with cell capacity of 1200 mAh/g and a gel polymer electrolyte was fabricated by the same procedure as in Example 5, except that behenyl acrylate was used at an amount of 1.5 wt%, based on the total weight of the electrolyte, instead of n-butyl acrylate.

### (Comparative Example 13)

A rechargeable lithium cell with cell capacity of 1200 mAh/g and a gel polymer electrolyte was fabricated by the same procedure as in Example 5, except that n-butyl methacrylate was used at an amount of 1.5 wt% based on the total weight of the electrolyte precursor, instead of n-butyl acrylate.

The rechargeable lithium cells according to Examples 5 to 7 and Comparative Example 11 to 13 were charged at 1C once, and the discharge capacity was measured. The results are shown in Table 5, as capacity. Furthermore, the rechargeable lithium cells according to Examples 5 to 7 and Comparative Example 11 to 13 were charged and discharged at 1C 100 times. When the discharge capacity at first discharge cycle refers to 100 %, the percentages, of the discharge capacity after 100 times were calculated. The results are shown in Table 5.

**Table 5**

| | Additive | Carbons in alkyl group of the additive | Capacity (mAh) | Cycle-life characteristic (%) |
|---|---|---|---|---|
| Comparative Example 11 | propyl acrylate | 3 | 1132 | 57 |
| Example 5 | n-butyl acrylate | 4 | 1309 | 92 |
| Example 6 | hexyl acrylate | 6 | 1287 | 92 |
| Example 7 | isodecyl acrylate | 13 | 1237 | 91 |
| Comparative Example 12 | behenyl acrylate | 22 | 1126 | 59 |
| Comparative Example 13 | n-butyl methacrylate | 4 | 1108 | 61 |

As shown in Table 5, the rechargeable lithium cells according to Examples 5 to 7, using an alkyl acrylate with a C4 to C13 alkyl group, exhibited good capacity and cycle-life characteristics, whereas the rechargeable lithium cells according to Comparative Examples 11 and 12 using an alkyl acrylate with a C3 alkyl group or a C22 alkyl group exhibited lower capacity and extremely lower cycle-life characteristics, compared to those of the cells according to Examples 5 to 7.

Furthermore, the rechargeable lithium cell according to Comparative Example 13, using alkyl methacrylate even though the alkyl group has four carbons, rather than an alkyl acrylate, exhibited deteriorated capacity and cycle-life characteristics.

While this invention has been described in connection with what is presently considered to be practical exemplary embodiments, it is to be understood that the invention is not limited to the disclosed embodiments, but, on the contrary, is intended to cover various modifications included within the scope of the appended claims.

## Claims

1. An electrolyte for a rechargeable lithium battery which comprises an alkyl acrylate additive having a C4 to C15 alkyl group; fluoroethylene carbonate; a monomer; a polymerization initiator; a lithium salt; and an organic solvent,
wherein the monomer comprises a compound represented by Chemical Formula 1: 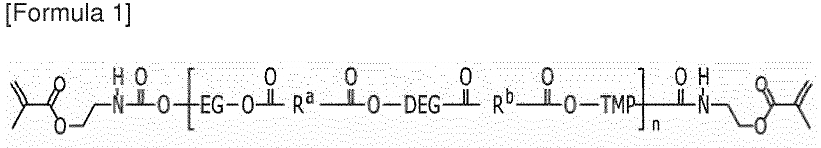
wherein R^{a} and R^{b} are the same or different, and are substituted or unsubstituted C1 to C6 divalent alkylene;
EG is a divalent moiety of ethylene glycol;
DEG is a divalent moiety of diethylene glycol; and
TMP is a divalent moiety of trimethylolpropane,
said compound having a weight average molecular weight of 60,000 g/mol to 100,000 g/mol.

2. An electrolyte for a rechargeable lithium battery according to claim 1, wherein the alkyl acrylate additive is a halogenated alkyl acrylate wherein the halogen is F, Cl, Br, I, or a combination thereof.

3. An electrolyte for a rechargeable lithium battery according to claim 2, wherein the halogenated alkyl acrylate is an alkyl acrylate in which 1 to 31 hydrogen(s) of the alkyl group are substituted with halogen(s).

4. An electrolyte for a rechargeable lithium battery according to any one of claims 1 to 3, wherein the amount of alkyl acrylate additive is in the range of 1.25 wt% to 2 wt%, based on the total weight of the electrolyte.

5. An electrolyte for a rechargeable lithium battery according to any one of claims 1 to 4, wherein the electrolyte has a viscosity of 4 to 30 centipoises (m Pa.s) at 25°C.

6. An electrolyte for a rechargeable lithium battery according to any one of claims 1 to 5, wherein the amount of fluoroethylene carbonate is in the range of 1 wt% to 20 wt%, based on the total weight of the electrolyte.

7. An electrolyte for a rechargeable lithium battery according to any one of claims 1 to 6, wherein the monomer comprises a combination of monomers as defined by Chemical Formula 1, and chosen from the group consisting of multifunctional acrylates; poly(ethylene glycol) dimethacrylates, poly(ethylene glycol) diacrylates; poly(ethylene glycol) divinyl ether ethylene glycol dimethacrylates; ethylene glycol diacrylates; ethylene glycol divinyl ether hexanediol diacrylates; tripropylene glycol diacrylate; tetraethylene glycol monoacrylate; caprolactone acrylate; or a combination thereof.

8. An electrolyte for a rechargeable lithium battery according to any one of claims 1 to 7, wherein the amount of monomer is in the range of 1 wt% to 20 wt%, based on the total weight of the electrolyte.

9. An electrolyte for a rechargeable lithium battery according to any one of claims 1 to 8, wherein the polymerization initiator is an organic peroxide or an azo-based compound, or a mixture thereof.

10. An electrolyte for a rechargeable lithium battery according to any one of claims 1 to 9, wherein the ratio of the alkyl acrylate additive to the monomer is in the range of from 1:2 to 1:10.

11. A rechargeable lithium battery comprising: an electrolyte according to any one of claims 1 to 10; a positive electrode including a positive active material; a battery case and a negative electrode including a negative active material.

12. A process of manufacturing a rechargeable lithium battery, wherein the rechargeable lithium battery of claim 11 is treated by curing at a temperature of 40°C to 100°C so that to polymerize the monomer in the battery case.

13. A rechargeable lithium battery obtainable by the process of manufacturing according to claim 12.

## Patentansprüche

1. Elektrolyt für eine wiederaufladbare Lithiumbatterie, der einen Alkylacrylatzusatzstoff mit einer C4- bis C15-Alkylgruppe, Fluorethylencarbonat; ein Monomer; einen Polymerisationsinitiator; ein Lithiumsalz; und ein organisches Lösungsmittel umfasst,
wobei das Monomer eine Verbindung umfasst, die durch die Chemische Formel 1 dargestellt ist: 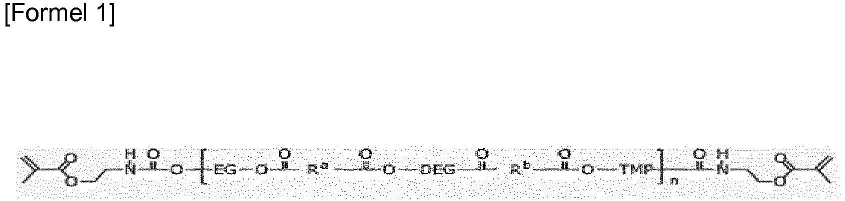
wobei R^{a} und R^{b} gleich oder unterschiedlich sind und substituiertes oder unsubstituiertes C1- bis C6-zweiwertiges Alkylen sind;
EG ein zweiwertiger Anteil von Ethylenglykol ist;
DEG ein zweiwertiger Anteil von Diethylenglykol ist; und
TMP ein zweiwertiger Anteil von Trimethylolpropan ist,
wobei die Verbindung ein Gewichtsdurchschnittsmolekulargewicht von 60.000 g/mol bis 100.000 g/mol aufweist.

2. Elektrolyt für eine wiederaufladbare Lithiumbatterie nach Anspruch 1, wobei der Alkylacrylatzusatzstoff ein halogeniertes Alkylacrylat ist, wobei das Halogen F, Cl, Br, I oder eine Kombination daraus ist.

3. Elektrolyt für eine wiederaufladbare Lithiumbatterie nach Anspruch 2, wobei das halogenierte Alkylacrylat ein Alkylacrylat ist, in dem 1 bis 31 Wasserstoff(e) der Alkylgruppe durch Halogen(e) substituiert ist/sind.

4. Elektrolyt für eine wiederaufladbare Lithiumbatterie nach einem der Ansprüche 1 bis 3, wobei die Alkylacrylatzusatzstoffmenge im Bereich von 1,25 Gew.-% bis 2 Gew.-% auf der Grundlage des Gesamtgewichts des Elektrolyts liegt.

5. Elektrolyt für eine wiederaufladbare Lithiumbatterie nach einem der Ansprüche 1 bis 4, wobei der Elektrolyt eine Viskosität von 4 bis 30 Zentipoise (m Pa.s) bei 25 °C aufweist.

6. Elektrolyt für eine wiederaufladbare Lithiumbatterie nach einem der Ansprüche 1 bis 5, wobei die Fluorethylencarbonatmenge im Bereich von 1 Gew.-% bis 20 Gew.-% auf der Grundlage des Gesamtgewichts des Elektrolyts liegt.

7. Elektrolyt für eine wiederaufladbare Lithiumbatterie nach einem der Ansprüche 1 bis 6, wobei das Monomer eine Kombination von Monomeren umfasst, wie bestimmt durch die Chemische Formel 1 und ausgewählt aus der Gruppe, die aus multifunktionalen Acrylaten; Poly(ethylenglykol)dimethacrylaten, Poly(ethylenglykol)diacrylaten; Poly(ethylenglykol)divinyletherethylenglykoldimethacrylaten; Ethylenglykoldiacrylaten; Ethylenglykoldivinyletherhexandioldiacrylaten; Tripropylenglykoldiacrylat; Tetraethylenglykolmonoacrylat; Caprolactonacrylat; oder einer Kombination daraus besteht.

8. Elektrolyt für eine wiederaufladbare Lithiumbatterie nach einem der Ansprüche 1 bis 7, wobei die Monomermenge im Bereich von 1 Gew.-% bis 20 Gew.-% auf der Grundlage des Gesamtgewichts des Elektrolyts liegt.

9. Elektrolyt für eine wiederaufladbare Lithiumbatterie nach einem der Ansprüche 1 bis 8, wobei der Polymerisationsinitiator ein organisches Peroxid oder eine Verbindung auf Azobasis oder eine Mischung daraus ist.

10. Elektrolyt für eine wiederaufladbare Lithiumbatterie nach einem der Ansprüche 1 bis 9, wobei das Verhältnis des Alkylacrylatzusatzstoffes zu dem Monomer im Bereich von 1:2 bis 1:10 liegt.

11. Wiederaufladbare Lithiumbatterie, umfassend: einen Elektrolyten nach einem der Ansprüche 1 bis 10; eine positive Elektrode, die ein positives Aktivmaterial einschließt; ein Batteriegehäuse und eine negative Elektrode, die ein negatives Aktivmaterial einschließt.

12. Verfahren zur Herstellung einer wiederaufladbaren Lithiumbatterie, wobei die wiederaufladbare Lithiumbatterie nach Anspruch 11 durch Aushärten bei einer Temperatur von 40 °C bis 100 °C behandelt wird, um das Monomer in dem Batteriegehäuse zu polymerisieren.

13. Wiederaufladbare Lithiumbatterie, herstellbar durch das Verfahren zur Herstellung nach Anspruch 12.

## Revendications

1. Électrolyte pour batterie au lithium rechargeable, qui comprend un additif acrylate d'alkyle ayant un groupe alkyle en C4 à C15 ; du carbonate de fluoroéthylène ; un monomère ; un amorceur de polymérisation ; un sel de lithium ; et un solvant organique,
dans lequel le monomère comprend un composé représenté par la formule chimique 1 : 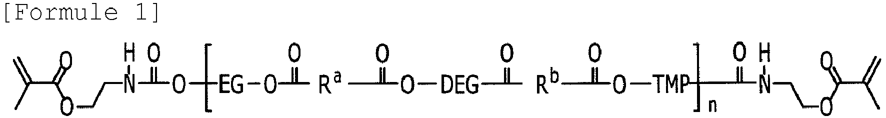
dans laquelle R^{a} et R^{b} sont identiques ou différents, et sont des alkylènes divalents en C1 à C6 substitués ou non substitués ;
EG est un radical divalent d'éthylèneglycol ;
DEG est un radical divalent de diéthylèneglycol ; et
TMP est un radical divalent de triméthylolpropane,
ledit composé ayant une masse moléculaire moyenne en masse de 60 000 g/mol à 100 000 g/mol.

2. Électrolyte pour batterie au lithium rechargeable selon la revendication 1, dans lequel l'additif acrylate d'alkyle est un acrylate d'alkyle halogéné dans lequel l'halogène est F, Cl, Br, I, ou une combinaison de ceux-ci.

3. Électrolyte pour batterie au lithium rechargeable selon la revendication 2, dans lequel l'acrylate d'alkyle halogéné est un acrylate d'alkyle dans lequel 1 à 31 hydrogène(s) du groupe alkyle sont remplacés par un ou des halogène(s).

4. Électrolyte pour batterie au lithium rechargeable selon l'une quelconque des revendications 1 à 3, dans lequel la quantité d'additif acrylate d'alkyle est située dans l'intervalle allant de 1,25 % en poids à 2 % en poids, par rapport au poids total de l'électrolyte.

5. Électrolyte pour batterie au lithium rechargeable selon l'une quelconque des revendications 1 à 4, dans lequel l'électrolyte a une viscosité de 4 à 30 centipoises (mPa.s) à 25 °C.

6. Électrolyte pour batterie au lithium rechargeable selon l'une quelconque des revendications 1 à 5, dans lequel la quantité de carbonate de fluoroéthylène est située dans l'intervalle allant de 1 % en poids à 20 % en poids, par rapport au poids total de l'électrolyte.

7. Électrolyte pour batterie au lithium rechargeable selon l'une quelconque des revendications 1 à 6, dans lequel le monomère comprend une combinaison de monomères tels que définis par la formule chimique 1, et choisis dans le groupe constitué par les acrylates multifonctionnels ; les diméthacrylates de polyéthylèneglycol, les diacrylates de polyéthylèneglycol ; les diméthacrylates d'éthylèneglycol et d'éther divinylique de polyéthylèneglycol ; les diacrylates d'éthylèneglycol ; les diacrylates d'hexanediol et d'éther divinylique d'éthylèneglycol ; le diacrylate de tripropylèneglycol ; le monoacrylate de tétraéthylèneglycol ; l'acrylate de caprolactone ; ou une combinaison de ceux-ci.

8. Électrolyte pour batterie au lithium rechargeable selon l'une quelconque des revendications 1 à 7, dans lequel la quantité de monomère est située dans l'intervalle allant de 1 % en poids à 20 % en poids, par rapport au poids total de l'électrolyte.

9. Électrolyte pour batterie au lithium rechargeable selon l'une quelconque des revendications 1 à 8, dans lequel l'amorceur de polymérisation est un peroxyde organique ou un composé azoïque, ou un mélange de ceux-ci.

10. Électrolyte pour batterie au lithium rechargeable selon l'une quelconque des revendications 1 à 9, dans lequel le rapport de l'additif acrylate d'alkyle au monomère est situé dans l'intervalle allant de 1/2 à 1/10.

11. Batterie au lithium rechargeable comprenant : un électrolyte selon l'une quelconque des revendications 1 à 10 ; une électrode positive contenant un matériau actif positif ; un boîtier de batterie et une électrode négative contenant un matériau actif négatif.

12. Procédé de fabrication de batterie au lithium rechargeable, dans lequel la batterie au lithium rechargeable de la revendication 11 est traitée par réticulation à une température de 40 °C à 100 °C de façon que le monomère dans le boîtier de batterie polymérise.

13. Batterie au lithium rechargeable susceptible d'être obtenue par le procédé de fabrication selon la revendication 12.
